# DEMANDE DE BREVET EUROPEEN

(11) **EP 1 591 018 A1**
(43) Date de publication de la demande: **02.11.2005**
(21) Numéro de dépôt: 05290938.9
(22) Date de dépôt: 28.04.2005
(51) Int. Cl.: A23K 1/16, A23K 1/175, A23L 1/29, A23L 1/32

(54) **Aliment pour poules pondeuses, procede d'alimentation et oeuf enrichi en elements essentiels**

(30) Priorité: 28.04.2004 FR 0404523
(71) Demandeur: Cybelia, 56920 Saint-Gerand (FR)
(72) Inventeur: Jacqout, Lionel, 75014 Paris (FR); Derian Gilbert, 56330 Pluvigner (FR); Galea, Fabien, 75015 Paris (FR)
(74) Mandataire: Breese, Pierre

(57) **Abrégé**

L'invention a pour objet composition pour aliment pour animaux, particulièrement pour poules pondeuses comprenant certains micronutriments en quantité suffisante pour obtenir un oeuf riche en ces mêmes micronutriments. L'invention concerne également un procédé d'alimentation d'animaux par lequel on alimente les animaux avec la composition selon l'invention et l'oeuf riche obtenu.

## Description

L'invention concerne le domaine de l'alimentation animale et plus précisément le domaine de l'alimentation des poules pondeuses.

Plus précisément, l'invention se rapporte à un aliment spécialement conçu pour la production d'oeufs enrichis en différentes vitamines, différents acides gras et en différents oligo-éléments.

Il est bien connu que l'organisme humain nécessite des besoins nutritionnels journaliers en vitamines, acides gras et oligo-éléments, qui sont apportés normalement par l'alimentation. Cependant, on sait également que l'alimentation est telle que ces apports nutritionnels ne sont pas toujours respectés. Ainsi, pouvoir fournir un aliment garantissant les apports journaliers nécessaires en vitamines, en acides gras et en oligo-éléments, à tout le moins en certains de ces éléments, constitue une préoccupation toujours d'actualité.

On connaît dans l'art antérieur des moyens qui permettent de répondre à cette attente des consommateurs. En particulier, ces apports peuvent être réalisés par la prise régulière de compléments alimentaires qui contiennent les éléments nécessaires. Il s'agit là en général de compléments qui sont des produits manufacturés donc non naturels, ce qui peut entraîner de la part des consommateurs toujours avides de produits naturels, une défiance vis-à-vis de ces produits.

C'est un des but de la présente invention que de fournir un aliment naturel enrichi en différents nutriments : vitamines, acides gras, oligo-éléments et caroténoïdes qui couvrent chez l'homme les besoins nutritionnels quotidiens conseillés en ces différents éléments.

On connaît aussi dans l'art antérieur des aliments enrichis en éléments essentiels. Mais il s'agit souvent d'aliments naturels enrichis à posteriori par adjonction sous quelque forme que ce soit de ces éléments. Dès lors, l'aliment naturel de base n'est plus un aliment naturel lorsqu'il se trouve proposé à la consommation. Là encore, ces produits ne répondent pas au désir des consommateurs d'avoir une alimentation saine en produits réellement naturels. La présente invention vise là encore à surmonter ce problème.

En effet, l'invention a pour objet une composition de base destinée à entrer dans un aliment pour poule pondeuse, spécialement conçue pour permettre la production d'oeufs enrichis naturellement en différents éléments.

On connaît dans l'art antérieur des aliments pour poules pondeuses qui permettent d'obtenir des oeufs enrichis en éléments. Cependant, ces aliments ne permettent d'obtenir que des oeufs enrichis en un seul élément.

À cet égard, on peut citer le brevet européen EP 1 021 960. Ce brevet décrit un aliment pour poules pondeuses, enrichi en acides gras (n-3) poly-insaturés qui permet d'obtenir des oeufs enrichis en acides gras (n-3) poly-insaturés, seulement en acides gras (n-3) poly-insaturés.

Dans le même ordre d'idées, on peut citer la Demande Internationale WO 98/47389, qui vise également à protéger une méthode pour produire des oeufs enrichis en acides gras (n-3) poly-insaturés, l'oeuf enrichi en acides gras (n-3) poly-insaturés et l'aliment pour poules pondeuses permettant d'obtenir de tels oeufs. Cette méthode ne permet d'obtenir des oeufs qu'enrichis en acides gras (n-3) poly-insaturés uniquement.

On peut encore citer le brevet européen EP 0 035 882 qui propose une méthode pour produire un oeuf enrichi uniquement en iode ou encore la Demande Internationale WO 99/52382 qui propose un oeuf enrichi en acide linoléique conjugué et une méthode pour l'obtenir.

Il ressort de ce qui précède que l'art antérieur décrit des méthodes et/ou des aliments qui ne permettent la production que d'oeufs enrichis en un seul élément, ce qui ne peut permettre de couvrir les besoins quotidiens en différents éléments.

Un des avantages de la présente invention est de fournir une composition de base destinée à entrer dans un aliment pour poule pondeuse permettant d'obtenir la production d'oeufs enrichis simultanément en vitamines, en acides gras et en oligo-éléments, à tout le moins en certains de ces éléments.

Cette composition de base n'est pas destinée à remplacer l'apport habituel de vitamines et d'oligo-éléments indispensables à la couverture des besoins nutritionnels des poules pondeuses.

Cette composition vient en complément de l'alimentation de base de la poule pondeuse. Cette composition est ajoutée en proportion voulue à l'aliment de base de la poule.

Ainsi l'invention à pour premier objet une composition de base pour aliment pour poules pondeuses comprenant au moins :
- du sélénium en une quantité comprise entre 0,2 et 1,5 parties par million (ppm), préférentiellement 0,3 et 0, 5 ppm ;
- de l'iode en une quantité comprise entre 5 et 15 ppm, préférentiellement 6 et 9 ppm ;
- de la vitamine E en une quantité comprise entre 50 et 400 ppm, préférentiellement 100 à 200 ppm ;
- de la vitamine D3 en une quantité comprise entre 500 et 5000 unités internationales (UI), préférentiellement entre 1000 et 3000 UI ;
- de la vitamine B1 en une quantité comprise entre 0,5 et 5 ppm, préférentiellement entre 2 et 4 ppm ;
- de la vitamine B6 en une quantité comprise entre 0,5 et 5 ppm, préférentiellement 2 et 4 ppm ;
- de l'acide folique en une quantité comprise entre 0,5 et 10 ppm, préférentiellement entre 4 et 6 ppm ;
- au moins un caroténoïde en une quantité comprise entre 20 et 60 ppm, préférentiellement entre 30 et 50 ppm.

Selon l'invention, le caroténoïde peut être tout caroténoïde compatible avec l'alimentation humaine et/ou animale, ou un mélange de caroténoïdes, tels que le lycopène le bêta carotène, la capsanthine, la lutéine ou la zéaxanthine. Avantageusement le caroténoïde est de la lutéine ou de la zéaxanthine, très avantageusement un mélange des deux.

Par partie par million, on entend selon l'invention mg par kg d'aliment complet délivré à la poule. Par aliment complet, on entend selon l'invention un aliment pour poule pondeuse comprenant au moins un aliment de base couramment utilisé dans le domaine de l'alimentation des poules pondeuses additionné d'une quantité donnée de la composition selon l'invention.

L' Homme du Métier sait incorporer la composition selon l'invention à l'aliment de base de la poule ; ce dernier est généralement constitué d'un mélange de différents ingrédients nécessaires à la bonne alimentation de la poule.

A titre indicatif, la proportion entre la composition selon l'invention et l'aliment de base peut être de 1%.

Bien entendu, l'Homme du Métier sait ajuster les quantités d'additifs nécessaires à l'obtention du produit de base selon l'invention en fonction de la nature et de la teneur de chaque élément qu'il désire utiliser pour constituer la composition de base de l'invention et bien évidemment en fonction de la réglementation en vigueur.

Les exemples présentés par ailleurs dans le texte sont une illustration de cet ajustement des quantités pour obtenir la composition selon l'invention.

Un des avantages de l'invention réside dans la formule de la composition de base qui permet la production d'un oeuf riche en certains micronutriments tout en préservant la teneur de l'oeuf en ses autres constituants nutritionnels (protéines et acides aminés notamment)

Selon l'invention, le sélénium peut se présenter sous toutes les formes connues compatibles avec l'alimentation, particulièrement l'alimentation animale et humaine. On peut citer comme forme utilisable du sélénium, le sélénite de sodium, le sélénite de calcium, le sélénite de cobalt, le sélénate de sodium, l'hydrogénosélénite de sodium, la sélénométhionine et les levures riches en sélénium. Préférentiellement selon l'invention, on utilise une souche de levure riche en sélénium.

Les apports alimentaires en sélénium chez l'homme sont estimés à 40-50 µg par jour, ce qui, compte tenu de la disponibilité de certains apports, paraît notoirement insuffisant. La population française est donc en déficit d'apport, comme une bonne partie de l'Europe, les céréales européennes étant le plus souvent bien plus pauvres en sélénium que les céréales américaines. L'oeuf riche en sélénium permet donc une excellente couverture des besoins en sélénium en l'absence totale de tout risque de surdosage, puisqu'il faudrait consommer plus de 30 oeufs par jour pour se rapprocher du seuil de toxicité.

Selon l'invention, l'iode peut se présenter sous toutes les formes connues compatibles avec l'alimentation, particulièrement l'alimentation animale et humaine. On peut citer comme forme utilisable de l'iode : l'iodure de potassium, l'iodure de sodium, l'iodure de calcium, l'iodate de potassium, l'iodate de sodium, l'iodate de calcium, l'ethyldiaminedihydroiodide ou encore l'acide diiodosalicylique.

Préférentiellement selon l'invention, on utilise l'iodate de calcium. D'après des études récentes, une bonne partie de la population française est en situation de déficit de couverture iodée : 5 à 20% des personnes selon les régions présenteraient un début de goitre en France.

Selon l'invention, la vitamine E peut se présenter sous toutes les formes connues compatibles avec l'alimentation, particulièrement l'alimentation animale et humaine. On peut citer comme forme utilisable de la vitamine E, l'acétate de dl-alpha-tocopherol et isomères associés, le dl-alpha-tocophérol et isomères associés, l'acétate de d-alpha-tocophérol (RRR), le d-alpha-tocopherol (RRR), le succinate de dl-alpha-tocopherol et isomères associés, le succinate de d-alpha-tocopherol (RRR). Préférentiellement selon l'invention, on utilise l'acétate de dl-alpha-tocopherol. Cette forme d'apport dans l'aliment est nettement plus stable que les autres sources. La dernière enquête française Suvimax (1995-2003) a montré que respectivement 19% et 38% de la population française masculine et féminine recevaient des apports en vitamine E inférieurs aux 2/3 de l'Apport Nutritionnel Conseillé (ANC).

Selon l'invention, la vitamine D3 peut se présenter sous toutes les formes connues compatibles avec l'alimentation, particulièrement l'alimentation animale et humaine. On peut citer comme forme utilisable de la vitamine D3, le cholécalciférol et les dérivés hydroxylés du cholécalciférol. Préférentiellement selon l'invention, on utilise le cholécalciférol. Les enquêtes alimentaires récentes font état d'une probabilité très élevée d'apports alimentaires largement inférieurs aux recommandations : dans l'enquête ESVITAF, ainsi que dans celle réalisée en Bourgogne, plus de la moitié des individus recevaient des apports inférieurs à 50% des ANC. Cette observation est confortée par le taux élevé de personnes pour lesquelles le statut biochimique (mesure du 25-hydroxycalciférol dans le sang) est déficient (35% des hommes et 25% des femmes)

Selon l'invention, la vitamine B1 peut se présenter sous toutes les formes connues compatibles avec l'alimentation, particulièrement l'alimentation animale et humaine. On peut citer comme forme utilisable de la vitamine B1, le mononitrate de thiamine et le chlorhydrate de thiamine. Préférentiellement selon l'invention, on utilise le mononitrate de thiamine. Environ un adulte sur deux reçoit des apports de vitamine B1 inférieurs aux recommandations, notamment 30 à 50% des femmes en consomment moins de 2/3 des recommandations. Certains aliments peuvent contenir des antivitamines B1 naturelles qui en réduisent l'utilisation, de même la biodisponibilité est affectée par l'alcool ou certains médicaments. Compte tenu de l'importance de cette vitamine sur les fonctions cognitives, notamment chez les personnes âgées, un apport supplémentaire est utile. Il l'est également chez les sportifs qui consomment une quantité importante de glucides.

Selon l'invention, la vitamine B6 peut se présenter sous toutes les formes connues compatibles avec l'alimentation, particulièrement l'alimentation animale et humaine. On peut citer comme forme utilisable de la vitamine B6, la pyridoxine, le chlorhydrate de pyridoxine, la pyridoxine-5'-phosphate et le dipalmitate de pyridoxine. Préférentiellement selon l'invention, on utilise le chlorhydrate de pyridoxine. L'apport moyen chez l'homme adulte serait de 1,9 mg/jour selon l'étude Suvimax alors que l'ANC a été fixé à 1,8. Ainsi environ 25% des adultes reçoivent moins de 1,57 mg/jour. Des apports élevés de vitamine B6 sous forme de suppléments nutritionnels seraient capables de déclencher des neuropathies, c'est pourquoi le Conseil Supérieur d'hygiène publique de France a proposé une dose limite de sécurité fixée à 5mg/ jour. L'apport de vitamine B6 via l'oeuf permet donc une grande sécurité pour ne pas dépasser les seuils de toxicité.

Selon l'invention, l'acide folique peut se présenter sous toutes les formes connues compatibles avec l'alimentation, particulièrement l'alimentation animale et humaine. On peut citer comme forme utilisable de l'acide folique, l'acide ptéroylmonoglutamique et plusieurs folates (monoglutamates et polyglutamates). Préférentiellement selon l'invention, on utilise l'acide ptéroylmonoglutamique. Les besoins en folates sont augmentés fortement au cours de la grossesse. Or, une carence à ce moment-là peut provoquer un défaut de fermeture du tube neural de l'embryon pouvant entraîner deux anomalies très graves : l'anencéphalie et la spina bifida. Entre 25% et 66% des femmes enceintes reçoivent moins de 250µg/jour d'acide folique, ce qui est notoirement insuffisant (ANC= 400µg/j). L'oeuf présente donc une très bonne voie d'apport de folates, en quantité et en disponibilité.

Selon l'invention, les caroténoïdes, avantageusement la lutéine et/ou la zéaxanthine, se présentent sous une forme compatible avec l'alimentation, particulièrement l'alimentation animale et humaine. On peut citer comme forme d'apport de caroténoïdes, avantageusement de lutéine et de zéaxanthine, le maïs et ses co-produits, la luzerne et ses coproduits et les extraits de fleurs de tagètes. Préférentiellement selon l'invention, on utilise des extraits de fleurs de tagètes. L'apport de lutéine via l'oeuf permet d'éviter les risques d'allergie retrouvés chez certains consommateurs de compléments alimentaires à base de tagètes. Il permet également une très bonne digestibilité grâce à la présence simultanée de lipides dans le jaune.

Selon un mode de réalisation particulier de l'invention, la composition de base peut comprendre un support. Ce support peut être bien évidemment tout support connu de l'art antérieur compatible avec l'alimentation, particulièrement l'alimentation animale et humaine. Ledit support peut comprendre des co-produits de céréales, des argiles, du carbonate de calcium, du phosphate sous diverses formes.

Selon une autre forme particulière de réalisation de l'invention, la composition peut comprendre en outre au moins un acide gras oméga 3.

Selon l'invention, les acides gras (n-3) poly-insaturés peuvent se présenter sous toutes les formes connues compatibles avec l'alimentation, particulièrement l'alimentation animale et humaine. On peut citer comme forme utilisable des acides gras, l'huile de lin, les graines de lin brutes ou traitées, par exemple thermiquement, les huiles de poissons, les extraits d'algues. Préférentiellement selon l'invention, on utilise les graines de lin traitées, très préférentiellement traitées par la chaleur.

La quantité en acides gras oméga 3 peut être comprise entre 4 et 13 g par kg d'aliment complet, préférentiellement entre 5 et 10 g par kg d'aliment complet.

Dans le cas où la composition de base selon l'invention comprend des acides gras oméga 3, l'alimentation d'une poule avec cette composition de base selon l'invention induit un avantage supplémentaire se traduisant par une diminution significative de la teneur en cholestérol de l'oeuf.

L'invention a également pour objet, un procédé d'alimentation animale, particulièrement un procédé d'alimentation des poules pondeuses, consistant en un apport journalier d'un aliment complet, comprenant la composition selon l'invention et un aliment standard pour poule.

Selon une variante du procédé de l'invention, la composition selon l'invention comprend en outre un apport en acides gras oméga 3.

Selon l'invention, la composition est ajoutée à l'aliment de base pour donner l'aliment complet pour se trouver en une quantité représentant de 0,2% à 2,0%, de préférence de 0,3% à 1% de l'aliment complet.

Selon l'invention, l'apport dans l'aliment de base en oméga 3 est réalisé par de la graine de lin préférentiellement traitée par la chaleur en une quantité représentant de 3 à 10 %, de préférence 4 à 6 % de l'aliment complet.

L'apport journalier d'aliment complet (aliment standard + composition selon l'invention) aux poules pondeuses peut être un apport "à volonté", la poule trouvant en permanence à sa disposition de la nourriture. On sait qu'en moyenne, une poule pondeuse ingurgite environ 110g à 120g de nourriture par jour. Ainsi selon l'invention, on apporte à la poule une quantité quotidienne d'aliment complet suffisante pour couvrir ses besoins. Cette quantité peut être comprise entre 50g et 200g, préférentiellement entre 100 et 150 g.

L'aliment complet doit être distribué aux poules au minimum pendant 3 semaines pour obtenir l'enrichissement prévu des oeufs.

L'invention a enfin pour objet un oeuf riche en sélénium, en iode, en vitamine E, en vitamine D3, en vitamine B1, en vitamine B6, en acide folique et en caroténoïde, avantageusement en lutéine et en zéaxanthine.

Selon une variante de l'invention, l'oeuf riche comprend en outre au moins un acide gras oméga 3, particulièrement un acide gras (n-3) poly-insaturé.

Avantageusement, l'oeuf selon l'invention peut être obtenu selon le procédé décrit précédemment.

Cet oeuf présente la particularité d'avoir une teneur en sélénium, en iode, en vitamine E, en vitamine D3, en vitamine B1, en vitamine B6, en acide folique, en caroténoïdes et éventuellement en acides gras (n-3) poly-insaturés, supérieure à celle d'un oeuf obtenu par les procédés habituels dans lesquels la poule ingère une alimentation normale.

Selon l'invention l'oeuf comprend au moins :
- du sélénium en une quantité comprise entre 10 et 60 µg pour 100g d'oeuf, préférentiellement entre 20 et 40 µg pour 100g d'oeuf ;
- de l'iode en une quantité comprise entre 100 et 350 µg pour 100g d'oeuf, préférentiellement entre 150 et 300 µg pour 100g d'oeuf ;
- de la vitamine E en une quantité comprise entre 2 et 20 mg pour 100g d'oeuf, préférentiellement entre 6 et 12 mg pour 100g d'oeuf ;
- de la vitamine D3 en une quantité comprise entre 0,50 et 2,5 µg pour 100g d'oeuf, préférentiellement entre 1,50 et 2,00 µg pour 100g d'oeuf ;
- de la vitamine B1 en une quantité comprise entre 40 et 100 µg pour 100g d'oeuf, préférentiellement entre 70 et 80 µg pour 100g d'oeuf ;
- de la vitamine B6 en une quantité comprise entre 20 et 200 µg pour 100g d'oeuf, préférentiellement entre 50 et 100 µg pour 100g d'oeuf ;
- de l'acide folique en une quantité comprise entre 50 et 150 µg pour 100g d'oeuf, préférentiellement entre 70 et 100 µg pour 100g d'oeuf ;
- de la lutéine et de la zéaxanthine en une quantité comprise entre 1,0 et 2,5 mg pour 100g d'oeuf, préférentiellement entre 1,3 et 2,00 mg pour 100g d'oeuf.

Selon une forme particulière de l'invention, l'oeuf peut en outre comprendre au moins :
- de l'acide alpha-linolénique en une quantité comprise entre 250 et 500 mg pour 100 g, préférentiellement entre 280 et 350 mg pour 100 g ; et/ou
- de l'acide docosahéxaénoïque (DHA) en une quantité comprise entre 90 et 160 mg pour 100 g, préférentiellement entre 110 et 140 mg pour 100 g.

Selon encore un autre aspect de l'invention, l'oeuf présente en teneur en cholestérol amoindri. Cette teneur peut être abaissée dans une proportion allant de 5% à 25%, préférentiellement de 15% à 20%.

D'autres caractéristiques de l'invention apparaîtront dans les exemples de réalisation de l'invention qui suivent, sans pour autant que ceux-ci ne constituent une quelconque limitation de l'invention.

### EXEMPLES :

### Exemple 1 : Exemples de préparation de composition selon l'invention :

La composition selon l'invention suivante (A) est préparée pour être incorporée à 1% dans un aliment de base pour poules pondeuses.

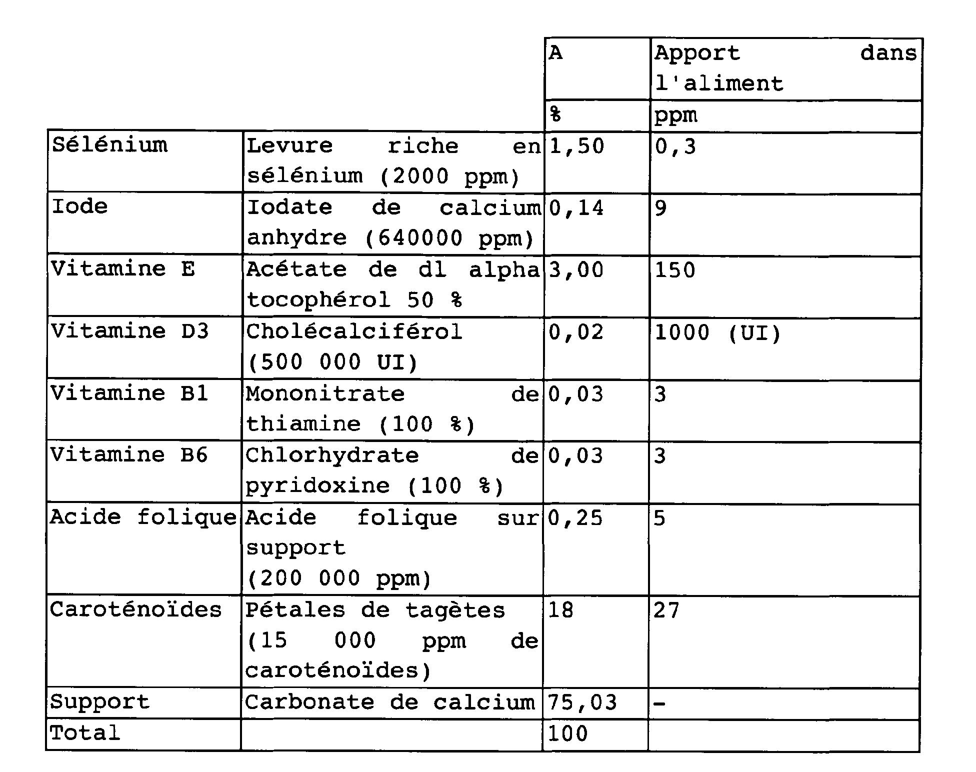

### Exemple 2 : Préparation d'une composition selon l'invention (B) :

La composition selon l'invention suivante est préparée pour être incorporée à 1% dans l'aliment pour poules pondeuses

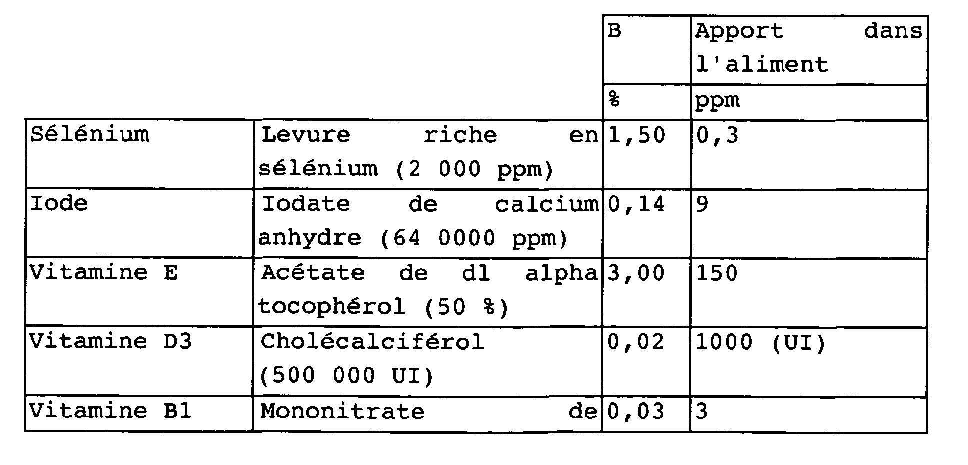

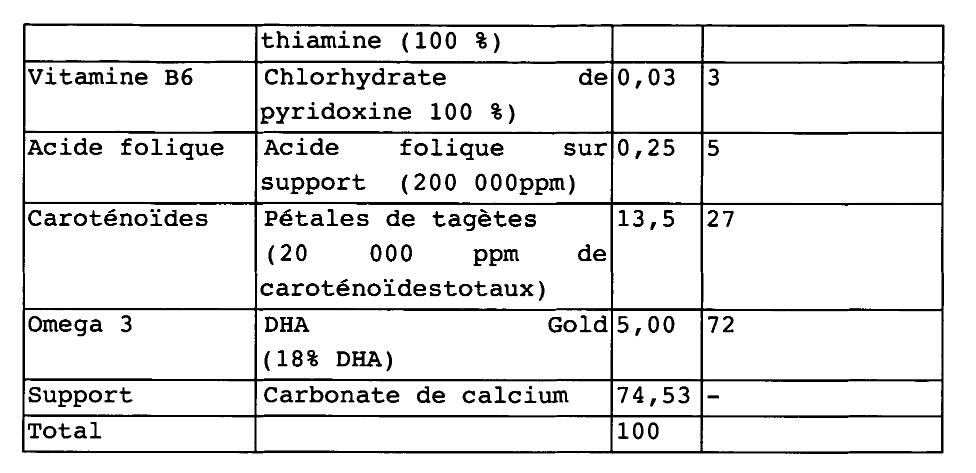

### Exemple 3 : Composition d'un aliment complet pour poule pondeuse selon l'invention :

- blé 27,0%
- maïs 33,0%
- huile végétale 0,5%
- tourteau soja 21,0%
- carbonate calcium 7,5%
- phosphate calcium 1,5%
- mélange graines lin - blé autoclavé 7,5%
- concentré luzerne 1,0%
- composition selon l'invention (A ou B) 1,0%

### Exemple 4 : Composition comparée entre un oeuf obtenu selon l'invention et un oeuf standard (Apports dans 100g oeuf sans coquille).

| | OEuf standard | OEuf selon l'invention | Evolution |
|---|---|---|---|
| vitamine E (mg) | 1 | 9 | 900% |
| Iode (µg) | 60 | 150 | 250% |
| Sélénium (µg) | 5 | 25 | 500% |
| Acide alpha-linolénique n-3 LNA (mg) | 40 | 280 | 700% |
| Acide docosahexaénoïque n-3 DHA (mg) | 40 | 120 | 300% |
| Total oméga 3 (mg) | 80 | 400 | 500 % |
| Acide linoléique n-6 LA (mg) | 1500 | 1500 | 0% |
| n-6 / n-3 | 18,5 | 3,8 | -80% |
| Cholesterol (mg) | 450 | 380 | -16% |
| Lutéine + zéaxanthine (mg) | 260 | 1400 | 540% |

## Revendications

1. Composition pour aliment pour poules pondeuses comprenant au moins :
- du sélénium en une quantité comprise entre 0,2 et 1,5 parties par million (ppm), préférentiellement 0,3 et 0, 5 ppm ;
- de l'iode en une quantité comprise entre 5 et 15 ppm, préférentiellement 6 et 9 ppm ;
- de la vitamine E en une quantité comprise entre 50 et 400 ppm, préférentiellement 100 à 200 ppm ;
- de la vitamine D3 en une quantité comprise entre 500 et 5000 unités internationales (UI), préférentiellement entre 1000 et 3000 UI ;
- de la vitamine B1 en une quantité comprise entre 0,5 et 5 ppm, préférentiellement entre 2 et 4 ppm ;
- de la vitamine B6 en une quantité comprise entre 0,5 et 5 ppm, préférentiellement 2 et 4 ppm ;
- de l'acide folique en une quantité comprise entre 0,5 et 10 ppm, préférentiellement entre 4 et 6 ppm ;
- au moins un caroténoïde en une quantité comprise entre 20 et 60 ppm, préférentiellement entre 30 et 50 ppm.

2. Composition selon la revendication 1, **caractérisée en ce que** le caroténoïde est choisi parmi tout caroténoïde compatible avec l'alimentation humaine et/ou animale, ou un mélange de caroténoïdes, tels que le lycopène le bêta carotène, la capsanthine, la lutéine ou la zéaxanthine, avantageusement la lutéine ou de la zéaxanthine, très avantageusement un mélange des deux.

3. Composition selon l'une quelconque des revendications 1 ou 2, **caractérisée en ce qu'**elle comprend en outre au moins un acide gras oméga 3, préférentiellement un acide gras (n-3) poly-insaturés, en une quantité comprise entre 4 et 13 g par kg d'aliment complet, préférentiellement entre 5 et 10 g par kg d'aliment complet.

4. Composition selon l'une quelconque des revendications précédentes, **caractérisée en ce que** le sélénium est sous la forme de sélénite de sodium, de sélénite de calcium, de sélénite de cobalt, de sélénate de sodium, d'hydrogénosélénite de sodium, de sélénométhionine ou de levures riches en sélénium, préférentiellement de levures riches en sélénium.

5. Composition selon l'une quelconque des revendications précédentes, **caractérisée en ce que** l'iode est sous la forme d'iodure de potassium, d'iodure de sodium, d'iodure de calcium, d'iodate de potassium, d'iodate de sodium, d'iodate de calcium, d'ethyldiaminedihydroiodide ou encore d'acide diiodosalicylique, préférentiellement d'iodate de calcium.

6. Composition selon l'une quelconque des précédente, **caractérisée en ce que** la vitamine E est sous la forme l'acétate de dl-alpha-tocopherol et isomères associés, de dl-alpha-tocophérol et isomères associés, d'acétate de d-alpha-tocophérol (RRR), de d-alpha-tocopherol (RRR), de succinate de dl-alpha-tocopherol et isomères associés, de succinate de d-alpha-tocopherol (RRR), préférentiellement d'acétate de dl-alpha-tocopherol.

7. Composition selon l'une quelconque des revendications précédentes, **caractérisée en ce que** la vitamine D3 est sous la forme de cholécalciférol et les dérivés hydroxylés du cholécalciférol, préférentiellement sous la forme de cholécalciférol.

8. Composition selon l'une quelconque des revendications précédentes, **caractérisée en ce que** la vitamine B1 est sous la forme de mononitrate de thiamine ou de chlorhydrate de thiamine, préférentiellement de mononitrate de thiamine.

9. Composition selon l'une quelconque des revendications précédentes, **caractérisée en ce que** la vitamine B6 est sous la forme de pyridoxine, de chlorhydrate de pyridoxine, de pyridoxine-5'-phosphate ou de dipalmitate de pyridoxine, préférentiellement de chlorhydrate de pyridoxine.

10. Composition selon l'une quelconque des revendications précédentes, **caractérisée en ce que** l'acide folique est sous la forme d'acide ptéroylmonoglutamique ou de folates (monoglutamates et polyglutamates), préférentiellement d'acide ptéroylmonoglutamique.

11. Composition selon l'une quelconque des revendications précédentes, **caractérisée en ce que** le caroténoïde est sous la forme de maïs et ses co-produits, de luzerne et ses coproduits ou d'extraits de fleurs de tagètes, préférentiellement d'extrait de fleurs de tagète.

12. Composition selon l'une quelconque des revendications précédentes, **caractérisée en ce que** l'acides gras est sous la forme d'huile de lin, de graines de lin brutes ou traitées, d'huiles de poisson ou d'extraits d'algues, préférentiellement de graines de lin traitées, très préférentiellement traitées par la chaleur.

13. Composition selon l'une quelconque des revendications précédentes, **caractérisée en ce qu'**elle comprend en outre un support.

14. Composition selon la revendication 13, **caractérisée en ce que** le support comprend des co-produits de céréales, des argiles, du carbonate de calcium, du phosphate sous diverses formes.

15. Aliment complet pour poules pondeuses comprenant un aliment de base pour poules pondeuses et la composition selon l'une quelconque des revendications 1 à 14.

16. Aliment selon la revendication 15, **caractérisée en ce que** la composition est en une quantité représentant de 0,2% à 2,0%, de préférence de 0,3% à 1% de l'aliment complet.

17. Aliment selon la revendication 15, **caractérisée en ce que** la composition comprend une quantité de graines de lin, préférentiellement traitées à la chaleur, en une quantité représentant de 3 à 10 %, de préférence 4 à 6 % de l'aliment complet.

18. Procédé d'alimentation des poules pondeuses consistant en un apport journalier d'un aliment complet selon l'une quelconque des revendications 15, 16 ou 17.

19. Procédé selon la revendication 18, **caractérisé en ce que** l'on apporte à la poule une quantité d'aliment complet comprise entre 50g et 200g, préférentiellement entre 100 et 150 g

20. OEuf riche en sélénium, en iode, en vitamine E, en vitamine D3, en vitamine B1, en vitamine B6, en acide folique et en caroténoïde, avantageusement en lutéine et en zéaxanthine.

21. OEuf riche susceptible d'être obtenu par le procédé selon l'une quelconque des revendications 18 ou 19.

22. OEuf selon l'une quelconque des revendications précédentes, **caractérisé en ce qu'**il comprend au moins :
- du sélénium en une quantité comprise entre 10 et 60 µg pour 100g d'oeuf, préférentiellement entre 20 et 40 µg pour 100g d'oeuf ;
- de l'iode en une quantité comprise entre 100 et 350 µg pour 100g d'oeuf, préférentiellement entre 150 et 300 µg pour 100g d'oeuf ;
- de la vitamine E en une quantité comprise entre 2 et 20 mg pour 100g d'oeuf, préférentiellement entre 6 et 12 mg pour 100g d'oeuf ;
- de la vitamine D3 en une quantité comprise entre 0,50 et 2,5 µg pour 100g d'oeuf, préférentiellement entre 1,50 et 2,00 µg pour 100g d'oeuf ;
- de la vitamine B1 en une quantité comprise entre 40 et 100 µg pour 100g d'oeuf, préférentiellement entre 70 et 80 µg pour 100g d'oeuf ;
- de la vitamine B6 en une quantité comprise entre 20 et 200 µg pour 100g d'oeuf, préférentiellement entre 50 et 100 µg pour 100g d'oeuf ;
- de l'acide folique en une quantité comprise entre 50 et 150 µg pour 100g d'oeuf, préférentiellement entre 70 et 100 µg pour 100g d'oeuf ;
- de la lutéine et de la zéaxanthine en une quantité comprise entre 1,0 et 2,5 mg pour 100g d'oeuf, préférentiellement entre 1,3 et 2,00 mg pour 100g d'oeuf.

23. OEuf selon l'une quelconque des revendications 20 à 22, **caractérisé en ce qu'**il comprend en outre au moins un acide gras oméga 3, particulièrement un acide gras (n-3) poly-insaturé.

24. OEuf selon la revendication 23, **caractérisé en ce qu'**il comprend de l'acide alpha-linolénique en une quantité comprise entre 250 et 500 mg pour 100 g, préférentiellement entre 280 et 350 mg pour 100 g ; et/ou de l'acide docosahéxaénoïque (DHA) en une quantité comprise entre 90 et 160 mg pour 100 g, préférentiellement entre 110 et 140 mg pour 100 g.

25. OEuf selon la revendication 23, **caractérisé en ce qu'**il présente une teneur en cholestérol abaissée de 5% à 25%, préférentiellement de 15% à 20%.
